# EUROPÄISCHE PATENTSCHRIFT

(11) **EP 0 449 859 B1**
(45) Veröffentlichungstag und Bekanntmachung des Hinweises auf die Patenterteilung: **10.11.1993**
(21) Anmeldenummer: 90900065.5
(22) Anmeldetag: 22.12.1989
(51) Int. Cl.: G01B 11/24

(54) **VERFAHREN UND VORRICHTUNG ZUR BEOBACHTUNG VON MOIREMUSTERN VON ZU UNTERSUCHENDEN OBERFLÄCHEN UNTER ANWENDUNG DES MOIREVERFAHRENS MIT PHASENSHIFTEN**
PROCESS AND DEVICE FOR OBSERVING MOIRE PATTERNS ON TEST SURFACES BY MOIREING WITH PHASE SHIFTS
PROCEDE ET DISPOSITIF D'OBSERVATION DE MOIRURES SUR DES SURFACES A EXAMINER PAR MOIRAGE A DEPHASAGE

(30) Priorität: 23.12.1988 DE 3843396; 08.03.1989 DE 3907430
(43) Veröffentlichungstag der Anmeldung: 09.10.1991
(73) Patentinhaber: PFISTER, Klaus, 83052 Bruckmühl (DE)
(72) Erfinder: PFISTER, Klaus, 83052 Bruckmühl (DE)
(74) Vertreter: König, Beate, Dipl.-Phys. Dr.
(86) Internationale Anmeldenummer: DE8900788
(87) Internationale Veröffentlichungsnummer: WO9007691

(56) Entgegenhaltungen:
- EP-A- 0 182 469
- EP-A- 0 262 089
- DE-A- 2 163 040
- DE-A- 3 527 074
- GB-A- 2 204 397
- US-A- 4 212 073

## Beschreibung

Die Erfindung bezieht sich auf ein Verfahren zur Beobachtung von Moirémustern von zu untersuchenden Oberflächen unter Anwendung des Moiréverfahrens mit Phasenshiften, bei dem zu beobachtende Objektraster auf Hilfsraster abgebildet und die dabei erzeugten Moirémuster erfaßt, gespeichert und/oder rechnerverarbeitet werden, wobei für eine Beobachtung mindestens drei phasenverschobene Moirémuster jeweils ausgewertet werden. Ferner bezieht sich die Erfindung auf eine Vorrichtung zur Beobachtung von Moirémustern von zu untersuchenden Oberflächen unter Anwendung des Moiréverfahrens mit Phasenshiften, wahlweise mit einer Raster-Projektionsanordnung, einem Objektraster der zu untersuchenden Oberfläche, einem Beobachtungsobjektiv, einem Hilfsraster, einer Kameraanordnung, einem Speicher und/oder Rechner.

Das Verfahren und die Vorrichtung der eingangs genannten Art sind nicht auf das Projektionsmoiréverfahren beschränkt, das für Out-of-plane-Messungen vorgesehen ist. Sie sind vielmehr allgemein auf die Beobachtung, Vermessung und Dokumentierung von Rastern und deren Veränderungen anwendbar, die unter Verwendung des Moiréverfahrens ausgewertet werden sollen, und somit auch zur Beobachtung und Messung von In-plane-Verformungen vorgesehen, bei denen fest auf oder in der Oberfläche des zu untersuchenden Objektes Raster aufgebracht sind und auf diese Weise Verformungsmessungen in der Ebene durchgeführt werden können. Unter Objektraster soll daher hier der Raster auf oder in dem Objekt sowie der projizierte Raster verstanden werden.

Mittels eines Verfahrens und einer Vorrichtung der eingangs genannten Art werden Oberflächen und deren Verformung beobachtet, wobei die Oberflächengestalt bzw. deren Verformung in Beobachtungsrichtung aufgenommen und dokumentiert wird. Der Anwendungsbereich erstreckt sich von mikroskopischer Beobachtung (z.B. im Bereich der Werkstoffprüfung, Biologie oder Medizin) bis zur Beobachtung von Flächen in m²-Größe (z.B. in der Fahrzeugindustrie). Die Beobachtung von Oberflächen und deren Verformung kann auf unterschiedliche Weise erfolgen. Gängige Verfahren zur flächenhaften Beobachtung sind außer den verschiedenen Moiréverfahren die Photogrammetrie, die Holographie und mit Einschränkung die Motographie. Diese Verfahren werden teils konkurrierend, teils sich ergänzend eingesetzt.

In der US-PS 4 641 972 ist ein Verfahren zur Bestimmung des Oberflächenprofils eines Objektes beschrieben, bei dem ein Lichtstrahl mit einem sich sinusförmig ändernden Intensitätsmuster auf das Objekt gerichtet wird, wobei die Phase des sinusförmigen Musters moduliert wird. Mittels einer Detektoranordnung wird ein deformiertes Gitterbild des Objektes für eine Anzahl verschiedener modulierter Phasen des auffallenden Lichtstrahls empfangen. Es werden so für die Objekt- und eine Bezugsebene punktweise eine Objekt- und eine Bezugsphase erhalten. Die Höhe eines jeden Punktes der Objektoberfläche wird dann in bezug auf die Bezugsebene aufgrund der Phasendifferenzen bestimmt.

Besonders einfach und wirtschaftlich zur Beobachtung von Oberflächen und deren Verformung ist das Projektionsmoiréverfahren. Das Meßprinzip ist dabei folgendes: Ein Linienraster wird schräg, unter einem definierten Winkel auf die zu vermessende Oberfläche projiziert, wobei die Helligkeitsverteilung des Rasters im allgemeinen einer Kreisfunktion entspricht. Die Oberfläche wird unter einem anderen Winkel durch eine Kamera oder dergleichen beobachtet, wobei sich der Beobachter bzw. die Kamera in der Regel im gleichen senkrechten Abstand zur Oberfläche befindet. Es werden zwei Beobachtungen bzw. Bilder überlagert, die such auf unterschiedliche Oberflächenformen beziehen, und auf diese Weise ein Moirémuster erzeugt. Es wird somit eine Relativmessung unter Verwendung von zwei zeitlich nacheinander erfolgten Beobachtungen durchgeführt. Bei Einhaltung bestimmter Randbedingungen entsprechen die einzelnen Ordnungen des Moirémusters äquidistanten Höhenlinien. Untersuchungen geometrischer Einflußgrößen beim Projektionsmoiréverfahren sind von G. Wutzke in "Über geometrische Einflußgrößen in der Moiré-Topographie", Materialprüf. 20 (1978), Nr. 9, Seiten 338 bis 342 beschrieben.

Bei einer aus der DE-OS 35 27 074 bekannten, unter Verwendung des Projektionsmoiréverfahrens arbeitenden Anordnung zur Bestimmung der Oberflächengestalt von Objekten für den Einsatz in einem Stereomikroskop, insbesondere für Augenuntersuchungen und -operationen, werden ein Projektions- und ein Referenzgitter mit dein Referenzgitter nachgeordneten optischen Mitteln zur Verschiebung des Bildes des aufprojizierten Gitters verwendet. In der EP-OS 0 262 089 ist eine weitere Vorrichtung zur Vermessung der Oberfläche eines Objektes beschrieben, bei der ein Moiréstreifenmuster durch Kombination zweier Strichgitter erzeugt wird und an der Objektoberfläche deformierte Streifenbilder mit einer Fernsehkamera aufgenommen und mit einer elektronischen Schaltung ausgewertet werden. Die Strichgitter werden zueinander verschoben, wobei die Phase des Streifenmusters um meßbare Beträge veränderbar ist.

Zur Auswertung ist es häufig ausreichend, nur das auf die Linien maximaler Helligkeit oder maximaler Schwärzung reduzierte Moirémuster zu verwenden. Es ist indessen vorteilhaft, statt eines derartigen Skelettierens des Moirémusters das Phasenshiftverfahren anzuwenden. Bei dem Phasenshiftverfahren werden für jedes der beiden zur Überlagerung erforderlichen Modulo-2-Pi-Bilder bzw. Phasenportraits, die jeweils einer bestimmten Oberflächengestalt zugeordnet sind, mindestens drei Einzelaufnahmen und zur Auswertung ein Rechner benötigt. Es wird somit von jeweils zwei überlagerten Rasterbildern der Bezugsraster in seiner Ausgangs- bzw. Grundposition und zwei dazu geshifteten Lagen betrachtet, die in der Regel um 120° phasenverschoben sind, so daß für jeden Objektpunkt drei Intensitätsverteilungen aufgenommen werden. Die drei Aufnahmen erfolgen infolge des Shiftens zeitlich nacheinander. Entsprechend enthält die Projektionsanordnung eine geeignete Vorrichtung, um die phasenverschobene Rasterprojektion, d.h. das Phasenshiften, zu ermöglichen. Das Phasenshiftverfahren zeichnet sich durch eine einfache Rechnerverarbeitung aus, denn im Gegensatz zum Skelettieren wird die Zählrichtung der Ordnungen erkannt und es ist praktisch kein interaktives Arbeiten erforderlich. Außerdem kann auf Bruchteile einer Moiréordnung aufgelöst werden. Der Grad der Auflösung ist dabei von der Präzision des Shiftens und von der Güte des beobachteten periodischen-Helligkeitsverlaufs des Rasters abhängig.

Eine Anwendung des Phasenshiftverfahrens ist z.B. in B. Breuckmann und W. Thieme, "Ein rechnergestütztes Holographiesystem für den industriellen Einsatz", VDI-Bericht, 552 (1985), Seiten 27 bis 36 beschrieben. Ein weiteres Verfahren und System zur Oberflächenbeobachtung ist aus der US-PS 4 212 073 bekannt, bei dem ein sinusförmiger Raster in drei Schritten jeweils um eine Viertelperiode des Rasters geshiftet wird, die Intensität der Strahlung von der Oberfläche erfaßt und für jeden Schritt gespeichert wird. Unter Verwendung einfacher arithmetischer Operationen werden aus diesen Speicherwerten Punkthöhen ermittelt. Nachteilig bei den bekannten Phasenshiftverfahren ist, daß sich die Oberflächengestalt während der Aufnahmezeit nicht oder nur unwesentlich verändern darf. Das Phasenshiftverfahren konnte daher bisher nur für statische Untersuchungen oder allenfalls zur Beobachtung von sehr langsamen Veränderungen eingesetzt werden. Dynamische Messungen, insbesondere im Kurzzeitbereich mit dynamischen, schnell ablaufenden Veränderungen von Oberflächenstrukturen sind bei Anwendung dieses Verfahrens nicht möglich.

Aus der EP-B-0 076 866 ist ein interpolierendes Lichtschnittverfahren bekannt, das dazu dient, Oberflächentopographie mit hoher Tiefenauflösung und hoher Genauigkeit in Echtzeit zu bestimmen. Es werden drei sinusförmig modulierte, um + 120° phasenversetzte, farbcodierte Streifenmuster auf das Meßobjekt projiziert (objektseitiges Shiften). Die projizierten Farbstreifenmuster werden bei der Beobachtung mit einer Farbfernsehkamera mittels dichroitischer Strahlteiler in die drei betreffenden Spektralbereiche zerlegt. Die Beobachtung der Farbauszüge erfolgt direkt, d.h. ohne eine Überlagerung von Hilfsrastern zum Erzeugen von Moirémustern. Die Bestimmung der relativen Phasenlage für einen Bildpunkt erfolgt aus jeweils drei Werten der Intensitätsverläufe der sinusförmig modulierten Streifenmuster mit fernsehtechnischen Mitteln. Für die Auflösung einer Ordnung des Objektrasters sind gemäß Abtasttheorem vier Sensorpunkte erforderlich. - Aus der spektralen Aufteilung des Projektionslichtes ist dieses Lichtschnittverfahren gegenüber Verfahren, die mit monochromatischem Licht arbeiten, in der Anwendung beschränkt, und zwar hinsichtlich extremer Kurzzeitbeobachtungen wegen der geringen Lichtintensität multispektraler Musterprojektion im Vergleich zu interferometrisch erzeugbarer Musterprojektion mittels eines Riesenimpulslasers; außerdem hinsichtlich Hochtemperaturanwendungen, bei denen der störende Eigenstrahlungsanteil durch extrem schmalbandige Beobachtung zu unterdrücken ist, sowie Überlagerung störender Intensität durch reflektiertes Fremdlicht, z.B. Tageslicht.

Zur Vergrößerung der Empfindlichkeit beim Projektionsmoiréverfahren, d.h. zur Erhöhung der Auflösung mit größerem Abstand der Höhenlinien voneinander, müssen der Projektionswinkel groß und die Rasterteilung möglichst klein sein. Eine Einschränkung hierbei ergibt sich durch die rechnerbedingte Digitalisierung der Bilddaten, die zu einer Begrenzung der Ortsfrequenz führt. Durch das Vorsehen eines zusätzlichen Hilfsrasters mit geeigneter, geringfügig verschiedener Teilung (Mismatch) kann die Liniendichte um ein bis zwei Größenordnungen erhöht und damit die Auflösung erheblich gesteigert werden. Auf diesen Hilfsraster wird die zu registrierende Rasterprojektion abgebildet, wobei ein wesentlich gröberes Moirémuster mit einer den Anforderungen der Digitalisierung genügenden Liniendichte entsteht. Es erfolgt somit eine hilfsweise Abspeicherung der zu registrierenden Rasterprojektion über ein Moirémuster. Da die zur Überlagerung kommenden beiden Aufnahmen auf denselben Hilfsraster abgebildet werden, entfällt dessen Einfluß auf die hilfweise erzeugten Muster der Modulo-2-Pi-Bilder nach der Überlagerung zweier solcher Aufnahmen. Entsprechende rechnergestütze optische Meßverfahren sind in "Einsatz höchstauflösender optischer Verfahren in der Oberflächenprüfung und 3D-Meßtechnik" von B. Breuckmann und P. Lübeck, VDI-Bericht 679 (1988), Seiten 71 bis 76 beschrieben.

Der Erfindung liegt die Aufgabe zugrunde, die Anwendung von Moiréverfahren auf dynamische und Kurzzeitmessungen zu ermöglichen.

Diese Aufgabe ist durch die Erfindung bei einem Verfahren und einer Vorrichtung mit den Merkmalen der Ansprüche 1 bzw. 7 gelöst. Vorteilhafte Weitergestaltungen des Verfahrens und der Vorrichtung sind Gegenstand der Unteransprüche.

Das erfindungsgemäße Verfahren ist somit dadurch gekennzeichnet, daß für eine Beobachtung die zu dem Objektraster zugehörigen phasenverschobenen Moirémuster gleichzeitig durch die Überlagerung der Objektrasterabbildung mit zueinander phasenverschobenen, d.h. phasenversetzt angeordneten, Hilfsrastern erzeugt und abgebildet sowie erfaßt werden. Bei dem Verfahren und der Vorrichtung gemäß der Erfindung wird somit mit einer starren Rasterprojektion bzw. mit einem starren, auf der Oberfläche des Objekts befindlichen Raster gearbeitet und auf der Beobachterseite geshiftet. Durch die gleichzeitige Moirémustererzeugung und -abbildung, d.h. das zeitlich parallele Einziehen der Einzelbeobachtungen in den Bildspeicher oder Rechner, ist der Zeitbedarf für die einzelne Messung außerordentlich gering und die zeitliche Begrenzung des Verfahrens ergibt sich nun nicht durch das Phasenshiftverfahren selbst, sondern durch die Belichtungszeit oder die zum Speichern eines Bildes benötigte Zeit. Sie ist somit abhängig von den verwendeten Geräten.

Bei einer vorteilhaften Variante des erfindungsgemäßen Verfahrens werden die phasenverschobenen Moirémuster erzeugt, indem der Objektraster durch mindestens drei Teilstrahlen auf mindestens drei separate, zueinander phasenversetzt angeordnete Hilfsraster abgebildet wird und die dort erzeugten phasenverschobenen Moirémuster gleichzeitig erfaßt werden. Die Moirémuster werden dann gleichzeitig an die Bildverarbeitung zur Speicherung und/oder zur elektronischen Auswertung weitergeleitet.

Alternativ können die phasenverschobenen Moirémuster erzeugt werden, indem der Objektraster mittels eines Beobachtungsstrahls auf einen mindestens drei Hilfsraster zusammengepackt enthaltenden Hilfsraster abgebildet wird, der mindestens die dreifache Teilung in bezug auf die zur Erzeugung eines einzelnen Moirémusters erforderliche Teilung aufweist, wobei die einzelnen phasenverschobenen Moirémuster erfaßt werden, indem die ineinanderverschachtelten Moirémuster aus dem verschachtelten Hilfsraster zeilen/spaltenweise entsprechend der mindestens dreifachen Teilung abgespeichert werden. Der zusammengepackte Hilfsraster kann somit durch das zeilen- bzw. spaltenweise Auslesen selektiv beobachtet werden. Ein vorteilhaftes Ausführungsbeispiel eines solchen zusammengepackten Hilfsrasters ist das Array einer CCD-Kamera, bei dem zur Auswertung die zu einem einfachen Hilfsraster gehörigen Reihen oder Zeilen pixelweise ausgelesen werden können, wobei die mindestens drei Einzelbilder leicht entfaltet werden können. Ein Vorteil dieser Verfahrensvariante ist, daß der Versuchsaufbau sehr einfach ist, denn es entfallen gegenüber der Verfahrensvariante mit Strahlteilung und insbesondere bei der Ausführung, die Von den Bildsensoren der Kamera getrennte Hilfsraster aufweist, die schwer gegeneinander justierbaren Hilfsraster und die Verwaltung mehrerer parallel abzuspeichernder Bildserien. Es kommt unter Umständen zu einem geringeren Lichtstärkeverlust, da bei den verschachtelten Hilfsrastern die notwendige Strahlteilung entfällt. Indessen ergibt sich bei der Verwendung eines zusammengepackten Hilfsrasters eine geringere Auflösung als bei den mit Strahlteilung arbeitenden Verfahrensvarianten.

Zweckmäßig sind bei dem erfindungsgemäßen Verfahren phasenversetzte Hilfsraster in zwei vorzugsweise zueinander senkrechten Richtungen vorgesehen. Dies ermöglicht die Messung von Verformungen in den Hauptvorzugsrichtungen der Raster.

Wird lediglich auf eine Hilfsrasterzeile oder -spalte abgebildet, wobei die zweidimensionale Kamerabeobachtung auf eine Linie reduziert wird, kann vorteilhaft ein CCD-Linienarray mit sehr hoher Pixelzahl verwendet werden. Auf diese Weise kann statt einer flächigen Übersicht mit geringerer Auflösung ein Profilschnitt mit sehr hoher Auflösung erhalten werden.

Eine erfindungsgemäße Vorrichtung zur Beobachtung von Moirémustern von zu untersuchenden Oberflächen unter Anwendung des Projektionsmoiréverfahrens mit Phasenshiften umfaßt
- einen Objektraster auf der zu untersuchenden Oberfläche,
- ein Beobachtungsobjektiv,
- einen Hilfsraster,
- eine Kameraanordnung,
- einen Speicher und/oder Rechner,
und ist dadurch gekennzeichnet, daß
- mindestens drei Hilfsraster hinter dem Objektraster phasenversetzt angeordnet sind und
- die Kameraanordnung die phasenverschobenen Moirémuster durch die Hilfsraster jeweils gleichzeitig erfaßt.

Vorzugsweise sind insbesondere zueinander senkrecht gekreuzte Raster, z.B. Linienraster, vorgesehen die eine Messung der Verformungen in deren Hauptrichtungen ermöglichen.

Zur Bildung der phasenverschobenen Hilfsraster sind vorzugsweise im Strahlengang Strahlteiler angeordnet, die den Strahl im mindestens drei Teilstrahlen aufteilen, und mindestens drei getrennte Hilfsraster und hinter diesen angeordnete Kameras vorgesehen. Als Strahlteiler sind vorteilhaft Teilerplatten oder Prismen vorgesehen und die Hilfsraster sind in der Kamerabildebene, in bezug aufeinander zur Erzeugung phasenverschobener Moirémuster versetzt angeordnet. Ist als Strahlteiler ein Prisma vorgesehen, ist zweckmäßig ein Farbfilter im Strahlengang vor dem Strahlteiler angeordnet. Dieses Ausführungsbeispiel der erfindungsgemäßen Vorrichtung ist somit nach dem Prinzip der Strahlteilung der Aufnahme von drei Teilbildern aufgebaut, das für völlig andere Anwendungen z.B. in Dreifarbenkameras (z.B. nach Bermpohl) realisiert ist. Zur Strahlteilung sind Teilerplatten oder Prismen vorgesehen. Im fall der Verwendung von Prismen ist ein Farbfilter zur Erzielung von monochromatischem Licht zweckmäßig. Bei der erfindungsgemäßen Vorrichtung werden mit der Kamera keine Farbauszüge, sondern phasengeshiftete Moirébilder erzeugt, indem der Objektraster, d.h. der auf dem Objekt befindliche oder auf dieses projizierte Raster, auf Hilfsraster in der Kamerabildebene abgebildet wird. Hilfsraster und Kamerabildebene fallen somit zusammen. Durch die Überlagerung kommt es zu Moirémustern und durch eine fest versetzte Anordnung der Hilfsraster in bezug auf einander und bezogen auf den Strahlengang kommt es zu phasengeshifteten Moirémustern.

Alternativ kann ein mindestens drei Hilfsraster zusammengepackt enthaltender Hilfsraster mit einer Zeilen- oder Spaltenteilung vorgesehen sein, die mindestens das Dreifache der zur Erzeugung eines Moirémusters erforderlichen Teilung ist, sowie der Hilfsraster in der Kamerabildebene angeordnet und eine Leseeinrichtung vorgesehen sein, die die Zeilen oder Spalten des Hilfsrastermusters zu den phasenverschobenen Moirémustern auflöst.

Bei einem bevorzugten Ausführungsbeispiel der Erfindung sind die Hilfsraster mit einer Zeile oder Spalte vorgesehen.

Der (die) Hilfsraster ist (sind) vorzugsweise durch rasterförmig aufgebaute Sensoren gebildet, wobei zweckmäßig ein CCD-Sensorarray vorgesehen ist.

Wenn als Hilfsraster oder Sensorraster Mikrokanalplatten vorgesehen sind, kann mit sehr kurzen Belichtungszeiten im ns-Bereich gearbeitet werden. Derzeit machen sich beim Einsatz von Mikrokanalplatten noch deren schlechte Präzision und geringe Punktezahl bemerkbar.

Bei einigen Anwendungsfällen wird eine Videokamera oder eine Trommelkamera vorgesehen.

Auf die zu untersuchende Oberfläche können die Raster fest aufgebracht sein. Es kann jedoch auch eine Projektionsanordnung für den Objektraster vorgesehen sein.

Die Erfindung wird im folgenden weiter anhand der Beschreibung bevorzugter Ausführungsbeispiele und der Zeichnung erläutert. Die Ausführungsbeispiele dienen lediglich zu Erläuterungszwecken und sind nicht als einschränkend anzusehen, insbesondere auch nicht in bezug auf das Vorhandensein oder Fehlen einzelner Elemente. In der Zeichnung zeigen
- Fig. 1: den schematischen Aufbau einer Vorrichtung mit Strahlteilung,
- Fig. 2: ein zweites Ausführungsbeispiel einer Vorrichtung mit Strahlteilung mit Prismen und CCD-Arrays als Hilfsrastern und
- Fig. 3: ein drittes Ausführungsbeispiel einer Vorrichtung mit Strahlteilung mit Teilerplatten und getrennten Hilfsrastern und Sensoren.

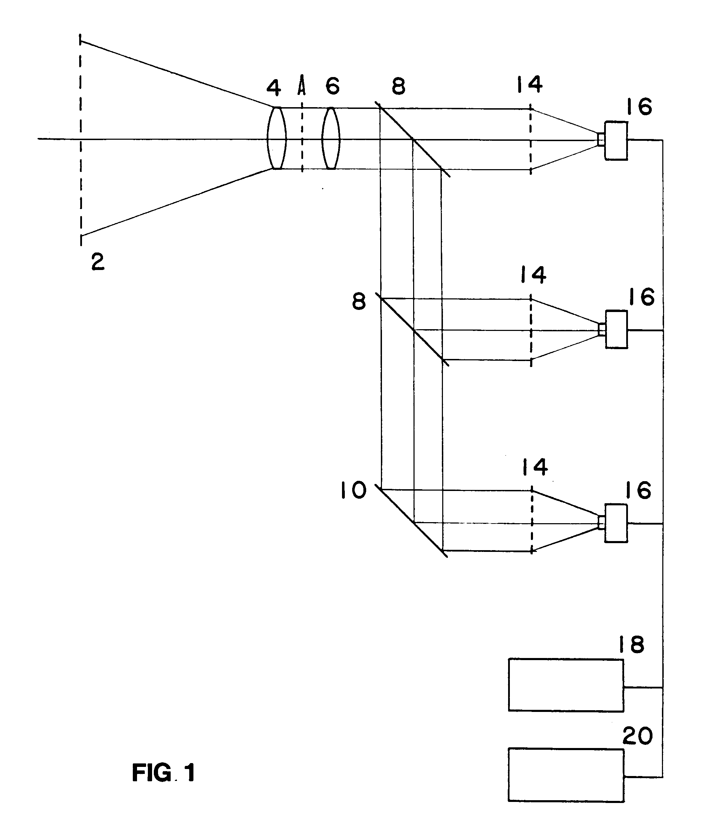

Bei einer Vorrichtung von Fig. 1 umfaßt ein einem Objektraster 2 nachgeordneter Abbildungsstrahlengang ein Objektiv 4 mit virtueller Abbildung A des zu beobachtenden Rastermusters. Mittels einer Optik 6, Strahlteiler 8, z.B. in Form von Teilerplatten, Teilerwürfeln oder Spiegeln 10, wird der Strahlengang geteilt und der Objektraster 2 auf drei Hilfsraster 14 abgebildet. Die Hilfsraster 14 sind im Strahlengang zueinander exakt um entsprechende Phasenwinkel, z.B. 120°, justiert. Den drei Hilfsrastern 14 sind Beobachter 16, z.B. Kameras wie Videokameras oder optische Trommelkameras, nachgeordnet bzw. verbunden. Ein Bildsatz, aus dem ein Modulo-2-Pi-Bild errechnet wird, wird gleichzeitig beobachtet und an einen Speicher 18 oder einen Rechner 20 weitergeleitet.

Die Hilfsraster 14 können auch durch rasterförmig aufgebaute Sensoren gebildet sein, wobei dann die Abbildungsoptiken der Kameras entfallen und stattdessen lediglich Sensorarrays angeordnet werden, um höhere Lichtstärken zu erzielen.

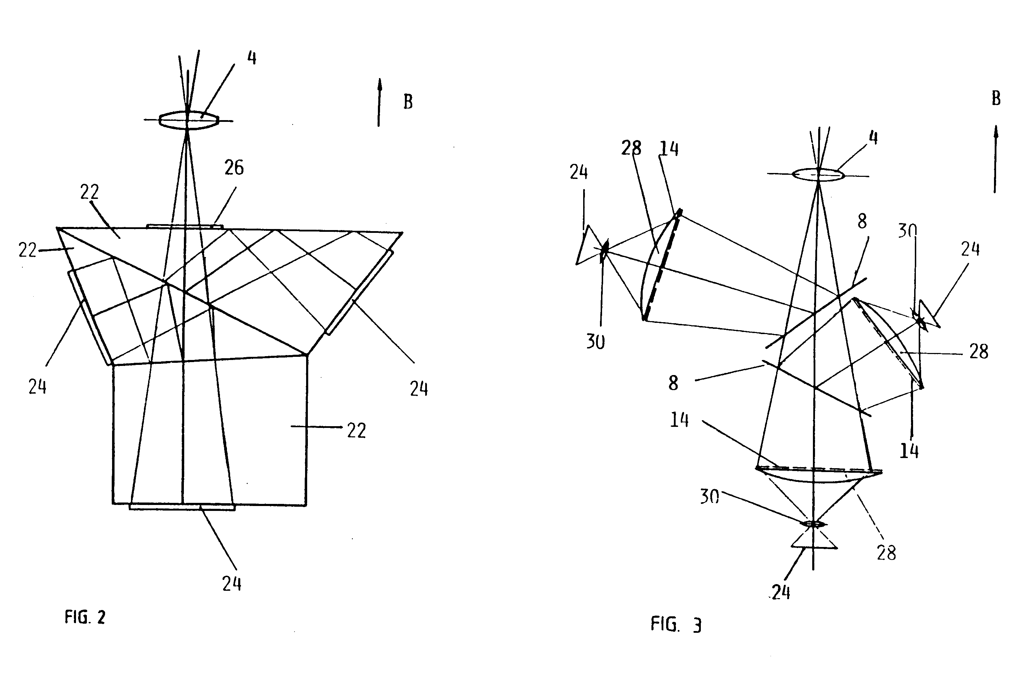

Bei der in Fig. 2 dargestellten Vorrichtung gemäß einem zweiten Ausführungsbeispiel der Erfindung ist eine Videokamera mit Prismen 22 zur Strahlteiling versehen. Die Beobachtungsrichtung ist durch einen Pfeil B angegeben. Beim einlachsten Aufbau sitzen an den Prismen CCD-Arrays 24, die die Funktionen des Sensors und des Hilfsrasters vereinigen. Zur Vermeidung störender Lichtbrechung bei der Strahlteilung wird vorzugsweise monochromatisches Licht verwendet. Dazu wird zweckmäßig ein einziges Farbfilter 26 im gemeinsamen Teil des Strahlengangs hinter dem Objektiv 4 vorgesehen. Alternativ kann der zu beobachtende Raster bzw. Objektraster mit monochromatischem Licht projiziert werden.

In Fig. 3 ist ein drittes Ausführungsbeispiel der Erfindung dargestellt, bei dem zur Strahlteilung Teilerplatten 8 vorgesehen sind und die Hilfsraster 14 und die Sensoren 24 räumlich getrennt sind. Zwischen den Hilfsrastern 14 und den Sensoren 24 ist eine Optik bestehend aus einer Feldlinse 28 und einem Makroobjektiv 30 angeordnet. Die phasengeshifteten Moirémuster werden von den Bildwandlern oder Speichern aufgenommen. Die Beobachtungsrichtung ist durch einen Pfeil B angegeben.

Bei dieser Anordnung muß der Sensor zwar beim diskreten Abtasten des Moirémusters das Abtasttheorem erfüllen, aber seine Liniendichte kann dabei weit unterhalb der Auflösung der Hilfsraster 14, die die eigentliche Auflösung bestimmen, liegen. Gegenüber der Vorrichtung mit Strahlteilung gemäß dem ersten Ausführungsbeispiel ist bei Sensoren mit gleicher Zeilen/Spaltenzahl die Auflösung bei Moirémessungen erhöht.

Vorstehend ist die Erfindung anhand bevorzugter Ausführungsbeispiele und ausgewählter Merkmale beschrieben und dargestellt worden.

## Patentansprüche

1. Verfahren zur Beobachtung von Moirémustern von zu untersuchenden Oberflächen unter Anwendung des Moiréverfahrens mit Phasenshiften, bei dem zu beobachtende Objektraster auf Hilfsraster abgebildet und die dabei erzeugten Moirémuster erfaßt, gespeichert und/oder rechnerverarbeitet werden, wobei für eine Beobachtung mindestens drei phasenverschobene Moirémuster jeweils ausgewertet werden, dadurch **gekennzeichnet,** daß für eine Beobachtung die zu dem Objektraster zugehörigen phasenverschobenen Moirémuster gleichzeitig durch die Überlagerung der Objektrasterabbildung mit zueinander phasenversetzt angeordneten Hilfsrastern erzeugt und abgebildet sowie erfaßt werden.

2. Verfahren nach Anspruch 1, dadurch **gekennzeichnet,** daß der Phasenversatz der Raster in zwei vorzugsweise zueinander senkrechten Richtungen vorgesehen wird.

3. Verfahren nach Anspruch 1 oder 2, dadurch **gekennzeichnet,** daß die phasenverschobenen Moirémuster erzeugt werden, indem der Objektraster durch mindestens drei Teilstrahlen auf mindestens drei separate, zueinander phasenversetzt angeordnete Hilfsraster abgebildet wird und die dort erzeugten phasenverschobenen Moirémuster gleichzeitig erfaßt werden.

4. Verfahren nach Anspruch 1 oder 2, dadurch **gekennzeichnet,** daß die phasenverschobenen Moirémuster erzeugt werden, indem der Objektraster mittels eines Strahls auf einen mindestens drei Hilfsraster zusammengepackt enthaltenden Hilfsraster abgebildet wird, der mindestens die dreifache Teilung in bezug auf die zur Erzeugung eines einzelnen Moirémusters erforderliche Teilung aufweist und daß die einzelnen phasenverschobenen Moirémuster erfaßt werden, indem die ineinanderverschachtelten Moirémuster aus dem verschachtelten Hilfsraster zeilen/spaltenweise entsprechend der mindestens dreifachen Teilung ausgelesen werden.

5. Verfahren nach einem der Ansprüche 1 bis 4, dadurch **gekennzeichnet,** daß lediglich auf eine Hilfsrasterzeile oder -spalte abgebildet wird.

6. Vorrichtung zur Beobachtung von Moirémustern von zu untersuchenden Oberflächen unter Anwendung des Moiréverfahrens mit Phasenshiften, mit
- einem Objektraster (2) auf der zu untersuchenden Oberfläche,
- einem Beobachtungsobjektiv (4),
- einem Hilfsraster (14),
- einer Kameraanordnung (16),
- einem Speicher (18) und/oder Rechner (20),
dadurch **gekennzeichnet,** daß
- mindestens drei Hilfsraster (14) hinter dem Objektraster (2) phasenversetzt angeordnet sind und
- die Kameraanordnung (16) die phasenverschobenen Moirémuster durch die Hilfsraster (14) jeweils gleichzeitig erfaßt.

7. Vorrichtung nach Anspruch 6, dadurch **gekennzeichnet,** daß insbesondere zueinander senkrecht gekreuzte Raster vorgesehen sind.

8. Vorrichtung nach Anspruch 6 oder 7, dadurch **gekennzeichnet,** daß im Strahlengang Strahlteiler (8, 10, 22) angeordnet sind, die den Strahl in mindestens drei Teilstrahlen aufteilen, und mindestens drei getrennte Hilfsraster (14) und hinter diesen angeordnete Kameras (16) vorgesehen sind.

9. Vorrichtung nach Anspruch 6 oder 7, dadurch **gekennzeichnet,** daß im Strahlengang als Strahlteiler Teilerplatten (8) oder Prismen (22) vorgesehen sind, die den Strahl in mindestens drei Teilstrahlen aufteilen, und mindestens drei getrennte Hilfsraster (14, 24) in der Kamerabildebene, in bezug aufeinander zur Erzeugung phasenverschobener Moirémuster versetzt angeordnet sind.

10. Vorrichtung nach Anspruch 9, mit Prismen als Strahlteiler, dadurch **gekennzeichnet,** daß ein Farbfilter (26) im Strahlengang vor dem Strahlteiler angeordnet ist.

11. Vorrichtung nach Anspruch 6, dadurch **gekennzeichnet,** daß ein mindestens drei Hilfsraster zusammengepackt enthaltender Hilfsraster mit einer Zeilen- oder Spaltenteilung vorgesehen ist, die mindestens das Dreifache der zur Erzeugung eines Moirémusters erforderlichen Teilung ist, der Hilfsraster in der Kamerabildebene angeordnet und eine Leseeinrichtung vorgesehen ist, die die Zeilen oder Spalten des Hilfsrastermusters zu den phasenverschobenen Moirémustern auflöst.

12. Vorrichtung nach Anspruch 6 oder 11, dadurch **gekennzeichnet,** daß Hilfsraster mit einer Zeile oder Spalte vorgesehen sind.

13. Vorrichtung nach einem der Ansprüche 6, 7, 9, 11 oder 12, dadurch **gekennzeichnet,** daß der bzw. die Hilfsraster durch rasterförmig aufgebaute Sensoren gebildet ist bzw. sind.

14. Vorrichtung nach Anspruch 13, dadurch **gekennzeichnet,** daß als der bzw. die Hilfsraster ein CCD-Sensorarray(s) vorgesehen ist bzw. sind.

15. Vorrichtung nach Anspruch 13, dadurch **gekennzeichnet,** daß als der bzw. die Hilfsraster eine Mikrokanalplatte(n) vorgesehen ist bzw. sind.

16. Vorrichtung nach einem der Ansprüche 6 bis 13, dadurch **gekennzeichnet,** daß eine oder mehrere Videokameras vorgesehen ist bzw. sind.

17. Vorrichtung nach einem der Ansprüche 6 bis 10, dadurch **gekennzeichnet,** daß eine oder mehrere Trommelkameras vorgesehen ist sind.

18. Vorrichtung nach einem der Ansprüche 6 bis 17, dadurch **gekennzeichnet,** daß auf die zu untersuchende Oberfläche Objektraster fest aufgebracht sind.

19. Vorrichtung nach einem der Ansprüche 6 bis 17, **gekennzeichnet** durch eine Projektionsanordnung für den Objektraster.

## Claims

1. Method of observing moiré patterns on test surfaces using the moiré method with phase shifts, in which object screens to be observed are reproduced on auxiliary screens and the moire patterns produced thereby are detected, stored and/or processed by computer, wherein for each observation at least three phase-shifted moiré patterns are evaluated, characterised in that for an observation the phase-shifted moiré patterns associated with the object screen are generated, reproduced and detected simultaneously by superimposing the object screen image using auxiliary screens which are phase-shifted in relation to each other.

2. Method according to claim 1, characterised in that the phase shift of the screens is in two directions which are preferably perpendicular to one another.

3. Method according to claim 1 or 2, characterised in that the phase-shifted moiré patterns are produced with the object screen being reproduced by at least three partial beams on at least three separate auxiliary screens which are phase-shifted relative to each other, and the phase-shifted moiré patterns produced there are detected simultaneously.

4. Method according to claim 1 or 2, characterised in that the phase-shifted moiré patterns are produced with the object screen being reproduced by means of a beam on to an auxiliary screen which contains at least three auxiliary screens packed together, the auxiliary screens giving at least the triple splitting in relation to the splitting necessary to produce a single moiré pattern, and in that the individual phase-shifted moiré patterns are detected with the interlaced moiré patterns being read out from the interlaced auxiliary screens in lines or columns corresponding to the said at least triple splitting.

5. Method according to one of claims 1 to 4, characterised in that reproduction is made on only one auxiliary screen line or column.

6. Apparatus for the observation of moiré patterns on test surfaces using the moiré method with phase shifts, comprising
- an object screen (2) at the test surface,
- a viewing lens (4),
- an auxiliary screen (14),
- a camera means (16),
- a store (18) and/or computer (20),
characterised in that
- at least three auxiliary screens (14) are arranged following the object screen (2) in phase-shifted array and
- the camera means (16) records the phase-shifted moiré patterns by each of the auxiliary screens (14) simultaneously.

7. Apparatus according to claim 6, characterised in that screens are provided which are set crossed especially perpendicular to one another.

8. Apparatus according to claim 6 or 7, characterised in that in the beam path are arranged beam splitters (8, 10, 22) which divide the beam into at least three parts, and at least three separate auxiliary screens (14) are provided, together with cameras (16) behind them.

9. Apparatus according to claim 6 or 7, characterised in that in the beam path are provided divider plates (8) or prisms (22) as beam splitters, which split the beam into at least three parts and at least three separate auxiliary screens (14, 24) are arranged in the camera image plane offset in relation to one another in order to produce phase-shifted moiré patterns.

10. Apparatus according to claim 9, with prisms as beam splitters, characterised in that a colour filter (26) is arranged in the beam path in front of the beam splitter.

11. Apparatus according to claim 6, characterised in that an auxiliary screen containing at least three auxiliary screens packed together is provided with a line or column division which is at least the triple of the division necessary to produce one moiré pattern, wherein the auxiliary screen is arranged in the camera image plane, and a reading device is provided which resolves the lines or columns of the auxiliary screen pattern to the phase-shifted moiré patterns.

12. Apparatus according to claim 6 or 11, characterised in that auxiliary screens with a scanning line or column are provided.

13. Apparatus according to one of claims 6, 7, 9, 11 or 12, characterised in that the auxiliary screen or screens is/are formed by raster-like sensors.

14. Apparatus according to claim 13, characterised in that a CCD-sensor array or arrays is/are provided as the auxiliary screen or screens.

15. Apparatus according to claim 13, characterised in that a microchannel plate or plates is/are provided as the auxiliary screen or screens.

16. Apparatus according to one of claims 6 to 13, characterised in that one or more video cameras are provided.

17. Apparatus according to one of claims 6 to 10, characterised in that one or more drum cameras are provided.

18. Apparatus according to one of claims 6 to 17, characterised in that object screens are mounted fixedly at the test surface.

19. Apparatus according to one of claims 6 to 17, characterised in that a projection system is provided for the object screen.

## Revendications

1. Procédé d'observation de moirés sur des surfaces à examiner utilisant la méthode des moirés avec déphasage, dans lequel on reproduit sur de reseaux auxiliaires de reseaux de l'objet à observer et on lit les moirés ainsi produits, on les mémorise et/ou on les traite par ordinateur, au moins trois moirés déphasés étant exploités respectivement pour une observation, caractérisé par le fait que, pour une observation, on produit, on représente et on lit les moirés déphasés correspondant au réseau de l'objet en superposant simultanément l'image du réseau de l'objet à des réseaux auxiliaires mutuellement déphasés.

2. Procédé selon la revendication 1, caractérisé par le fait que le déphasage des réseaux est prévu dans deux directions de préférence mutuellement perpendiculaires.

3. Procédé selon la revendication 1 ou 2, caractérisé par le fait que l'on produit les moirés déphasés en représentant le réseau de l'objet au moyen d'au moins trois faisceaux partiels sur au moins trois réseaux auxiliaires séparés, mutuellement déphasés et on lit sur ceux-ci simultanément les moirés déphasés produits.

4. Procédé selon la revendication 1 ou 2, caractérisé par le fait que l'on produit les moirés déphasés en représentant le réseau de l'objet au moyen d'un faisceau sur un réseau auxiliaire qui contient au moins trois réseaux auxiliaires paquetés ensemble et présente une division au moins triple de la division nécessaire pour produire un seul moiré et par le fait qu'on lit les différents moirés individuels et déphasés en lisant par ligne/colonne, sur le réseau auxiliaire imbriqué, conformément à la division au moins triple, les moirés imbriqués.

5. Procédé selon l'une des revendication 1 à 4, caractérisé par le fait que la représentation est effectuée sur une seule ligne ou une seul colonne de réseau auxiliaire.

6. Dispositif pour l'observation de moirés de surfaces à examiner utilisant la méthode des moirés avec déphasage, comportant
- un réseau d'objet (2) sur la surface à examiner,
- un objectif d'observation (4),
- un réseau auxiliaire (14),
- un système de caméra (16),
- une mémoire (18) et/ou un ordinateur (20),
caractérisé par le fait
- qu'au moins trois réseaux auxiliaires (14) sont disposés de manière déphasée derrière le réseau (2) de l'objet et
- le système de caméra (16) lit respectivement simultanément les moirés déphasés à travers les réseaux auxiliaires (14).

7. Dispositif selon la revendication 6, caractérisé par le fait qu'il est prévu notamment des réseaux croisés perpendiculaires.

8. Dispositif selon la revendication 6 ou 7, caractérisé par le fait que des diviseurs de faisceau (8, 10, 22) sont disposés sur le trajet du faisceau, lesquels diviseurs divisent le faisceau en au moins trois faisceaux partiels et par le fait qu'il est prévu au moins trois réseaux auxiliaires (14) distincts et, derrière ceux-ci, des caméras (16).

9. Dispositif selon la revendication 6 ou 7, caractérisé par le fait qu'il est prévu comme diviseurs de faisceau, sur le trajet du faisceau, des lames séparatrices (8) ou des prismes (22) qui divisent le faisceau en au moins trois faisceaux partiels et par le fait qu'au moins trois réseaux auxiliaires (14, 24) distincts sont disposés de manière mutuellement décalée dans le plan d'image de la caméra à des fins de production de moirés déphasés.

10. Dispositif selon la revendication 9 avec des prismes comme diviseurs de faisceau, caractérisé par le fait q'un filtre chromatique (26) est disposé sur le trajet du faisceau, avant le diviseur de faisceau.

11. Dispositif selon la revendication 6, caractérisé par le fait qu'il est prévu un réseau auxiliaire comportant au moins trois réseaux auxiliaires paquetés ensemble avec une division en ligne ou en colonnes qui est au moins triple de la division nécessaire pour produire un moiré, par le fait que le réseau auxiliaire est disposé dans le plan d'image de la caméra et par le fait qu'il est prévu un dispositif de lecture qui transforme les lignes ou les colonnes du modèle de réseau auxiliaire en moirés déphasés.

12. Dispositif selon la revendication 6 ou 11, caractérisé par le fait qu'il est prévu des réseaux auxiliaires à une ligne ou une colonne.

13. Dispositif selon l'une des revendications 6, 7,9, 11 ou 12 caractérisé par le fait que le ou les réseau(x) auxiliaire(s) est (sont) constitué(s) par des capteurs agencés en réseau.

14. Dispositif selon la revendication 13, caractérisé par le fait qu'il est prévu comme réseau(x) auxiliaire(s) un (des) réseau(x) de capteurs CCD (5).

15. Dispositif selon la revendication 13, caractérisé par le fait qu'il est prévu comme réseau(x) auxiliaire(s) une (des) plaques à microcanaux.

16. Dispositif selon l'une des revendications 6 à 13, caractérisé par le fait qu'il est prévu une ou plusieurs caméra(s) vidéo.

17. Dispositif selon l'une des revendications 6 à 10, caractérisé par le fait qu'il est prévu une ou plusieurs caméra(s) à rouleau.

18. Dispositif selon l'une des revendications 6 à 17, caractérisé par le fait que des réseaux d'objet sont appliqués de manière fixe sur la surface à examiner.

19. Dispositif selon l'une des revendications 6 à 17, caractérisé par un dispositif de projection pour le le réseau d'objet.
